(19) **Europäisches Patentamt / European Patent Office / Office européen des brevets**

(11) **EP 3 874 249 B1**

(12) **FASCICULE DE BREVET EUROPEEN**

(45) Date de publication et mention de la délivrance du brevet:
**20.07.2022 Bulletin 2022/29**

(21) Numéro de dépôt: **19816375.0**

(22) Date de dépôt: **29.10.2019**

(51) Classification Internationale des Brevets (IPC):
**G01M 15/14** *(2006.01)* **B64F 5/60** *(2017.01)*
**F02C 7/00** *(2006.01)* **F28D 15/00** *(2006.01)*
**G01M 99/00** *(2011.01)* **G05B 23/02** *(2006.01)*
**G06Q 10/00** *(2012.01)* **F02C 9/00** *(2006.01)*
**F28D 1/047** *(2006.01)* **F28D 21/00** *(2006.01)*
**F28F 1/12** *(2006.01)*

(52) Classification Coopérative des Brevets (CPC):
**G01M 15/14; F02C 9/00; F28D 1/0471; F28F 1/12; G01M 99/007;** F05D 2260/213; F05D 2260/80; F05D 2270/11; F28D 2021/0026; G05B 23/0283; G06Q 10/20; Y02T 50/60

(86) Numéro de dépôt international:
**PCT/FR2019/052566**

(87) Numéro de publication internationale:
**WO 2020/089555 (07.05.2020 Gazette 2020/19)**

(54) **DISPOSITIF ET PROCÉDÉ DE SURVEILLANCE DE DURÉE DE VIE D'UN ÉQUIPEMENT HYDRAULIQUE D'UN AÉRONEF**

VORRICHTUNG UND VERFAHREN ZUR ÜBERWACHUNG DER LEBENSDAUER EINES HYDRAULIKGERÄTS EINES FLUGZEUGS

DEVICE AND METHOD FOR MONITORING THE LIFETIME OF A HYDRAULIC APPARATUS OF AN AIRCRAFT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **31.10.2018 FR 1860113**

(43) Date de publication de la demande:
**08.09.2021 Bulletin 2021/36**

(73) Titulaire: **SAFRAN AIRCRAFT ENGINES**
**75015 Paris (FR)**

(72) Inventeurs:
• **ELBAZ, Ruben Abraham**
**77550 MOISSY-CRAMAYEL (FR)**

• **GUILLOU, Lancelot**
**77550 MOISSY-CRAMAYEL (FR)**
• **FABBRO, Nicolas Andrea**
**77550 MOISSY-CRAMAYEL (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
**EP-A1- 2 390 742 WO-A1-2013/191594**
**JP-A- 2001 108 669**

## Description

L'invention concerne un dispositif et un procédé de surveillance de durée de vie d'au moins un équipement hydraulique d'un aéronef soumis à des variations de pression hydraulique en vol.

Un domaine d'application de l'invention est la maintenance d'aéronefs, notamment ceux dotés de turboréacteurs.

Dans ce domaine, on connaît le document EP2390742-A1 qui propose de déterminer des compteurs de sévérité pour un équipement donné (par exemple la turbine haute-pression ou le compresseur haute-pression), chaque compteur de sévérité étant fonction d'un paramètre mesuré (vitesse de rotation de l'arbre, couple, ou température), de cumuler les compteurs de sévérité et de déterminer le moment où l'accumulation des compteurs de sévérité dépasse un seuil prédéterminé. On connaît également le document WO2013/191594-A1 qui divulgue un dispositif permettant de prédire l'utilisation de vie d'un composant d'aéronef à partir d'un modèle par éléments finis de ce composant; on détermine un niveau de sollicitation au niveau de nœuds critiques limitant la durée de vie du composant à partir du modèle et de paramètres de mesure tels que température et/ou contrainte.

En particulier, l'équipement hydraulique peut être un échangeur de chaleur, positionné dans le flux secondaire comme source additionnelle de refroidissement de cet équipement, dans un turboréacteur d'aéronef. Un tel échangeur de chaleur est connu par exemple par le document EP-A-1 916 399.

L'invention vise à obtenir un dispositif et un procédé de surveillance de durée de vie d'au moins un équipement, permettant un suivi de la fatigue de l'équipement hydraulique, pour pouvoir effectuer une maintenance préventive de cet équipement. En effet, une telle maintenance préventive, consistant à surveiller l'état de santé de l'équipement pour le changer ou le réparer suffisamment tôt, permet de réduire les pannes en vol (en anglais : In-Flight Shut Down), le taux d'arrêt forcé au sol de l'aéronef (en anglais : Aircraft On Ground) et le taux d'annulation et de retard de vols (en anglais : Delays & Cancellations), cette réduction étant cruciale pour la rentabilité d'un turboréacteur.

A cet effet, un premier objet de l'invention est un dispositif de surveillance de durée de vie d'au moins un équipement hydraulique d'un aéronef soumis à des variations de pression hydraulique en vol, le dispositif comportant une interface de réception de données de mesure représentatives de la pression hydraulique de l'équipement en fonction du temps en vol,

caractérisé en ce que le dispositif comporte un dispositif de traitement, comportant un moyen pour détecter, à partir des données de mesure, une sollicitation en pression à caractère endommageant, définie par le fait que la pression comporte une augmentation de pression, supérieure à un seuil déterminé d'endommagement supérieur à zéro, suivie d'une diminution de pression supérieure au seuil déterminé d'endommagement,

un moyen de calcul d'une amplitude de variation de pression, égale au maximum de la valeur absolue de l'augmentation de pression de la sollicitation en pression à caractère endommageant et de la valeur absolue de la diminution de pression de la sollicitation en pression à caractère endommageant,

un moyen pour projeter l'amplitude de variation de pression sur une courbe prescrite décroissante de modèle d'endommagement ou droite prescrite décroissante de modèle d'endommagement, donnant un nombre admissible de sollicitations en pression à caractère endommageant en fonction de l'amplitude de variation de pression, pour déterminer le nombre admissible de sollicitations en pression à caractère endommageant correspondant à l'amplitude de variation de pression ayant été calculée,

un moyen de calcul pour calculer un ratio de potentiel d'endommagement, égal à un nombre de sollicitations de référence, déterminé, divisé par le nombre admissible de sollicitations en pression à caractère endommageant ayant été calculé,

un moyen pour incrémenter un compteur de cumul de ratios de potentiel d'endommagement par le ratio de potentiel d'endommagement ayant été calculé.

L'usure en fatigue des équipements hydrauliques de moteurs d'aéronefs au fil des heures de fonctionnement du moteur est directement liée non seulement au nombre de sollicitations qu'ils subissent mais également à l'amplitude des variations de pression lors de chaque cycle. L'invention permet ainsi de quantifier individuellement la sévérité des sollicitations à caractère endommageant pour chaque vol.

L'invention permet de développer des prédicteurs de vieillissement, permettant l'introduction de moyens dédiés à la maintenance prédictive.

Le ratio cumulé d'endommagement, calculé par le compteur permet d'estimer la durée de vie restante d'un équipement en exploitation.

L'invention permet ainsi une vérification statistique de la durée de vie constatée en service pour les équipements hydrauliques de l'aéronef, une catégorisation des moteurs d'aéronefs munis de l'équipement hydraulique pour connaître quelles sont les flottes d'aéronefs et les conditions d'utilisation générant le plus de fatigue de l'équipement, et par conséquent générant le vieillissement le plus rapide de l'équipement. Les données issues des sollicitations en pression à caractère endommageant détectées produites par l'invention, couplées aux informations relatives aux conditions dans lesquelles les flottes opèrent permettent de fournir des estimations quant au vieillissement et à la durée de vie restante des équipements hydrauliques, permettant ainsi la mise en place d'une maintenance prédictive.

En cas de problèmes de qualité, de réparations ou retouches non conformes ou d'utilisation de pièces non garanties ou fournies par des sources non officielles, la connaissance statistique de la vitesse de vieillissement des équipements apportée par l'emploi en service de l'invention va de plus faciliter la mise en évidence de l'écart de comportement en fatigue par rapport aux pièces de référence et la détection d'anomalies concernant la durée de vie d'un équipement.

L'invention permet la collecte et le stockage d'une masse très importante de données concernant les niveaux de pression effectivement observés au niveau des équipements hydrauliques, ce qui permet de spécifier au plus juste le besoin en tenue des équipements sur de futurs programmes.

Suivant un mode de réalisation de l'invention, le dispositif de surveillance comporte un estimateur pour déterminer la pression hydraulique de l'équipement à partir de valeurs d'une autre pression hydraulique d'un autre équipement de l'aéronef en fonction du temps, qui sont comprises dans les données de mesure et qui ont été mesurées par un capteur de mesure prévu sur cet autre équipement.

Suivant un mode de réalisation de l'invention, le dispositif de traitement comporte un moyen d'alerte pour émettre vers l'extérieur un message d'alerte, lorsque le cumul de ratios de potentiel d'endommagement du compteur est supérieur ou égal à un seuil prédéfini d'alerte.

Un deuxième objet de l'invention est un procédé de surveillance de durée de vie d'au moins un équipement hydraulique d'un aéronef soumis à des variations de pression hydraulique en vol, procédé dans lequel on reçoit, au cours d'une étape de réception sur une interface de réception, des données de mesure représentatives de la pression hydraulique de l'équipement en fonction du temps en vol,
caractérisé en ce que

au cours d'une étape de détection, l'on détecte par un dispositif de traitement, à partir des données de mesure, une sollicitation en pression à caractère endommageant, définie par le fait que la pression comporte une augmentation de pression, supérieure à un seuil déterminé d'endommagement supérieur à zéro, suivie d'une diminution de pression supérieure au seuil déterminé d'endommagement,
au cours d'une étape de calcul, on calcule par le dispositif de traitement une amplitude de variation de pression, égale au maximum de la valeur absolue de l'augmentation de pression de la sollicitation en pression à caractère endommageant et de la valeur absolue de la diminution de pression de la sollicitation en pression à caractère endommageant,
au cours d'une étape de projection, on projette par le dispositif de traitement l'amplitude de variation de pression sur une courbe prescrite décroissante de modèle d'endommagement ou droite prescrite décroissante de modèle d'endommagement, donnant un nombre admissible de sollicitations en pression à caractère endommageant en fonction de l'amplitude de variation de pression, pour déterminer le nombre admissible de sollicitations en pression à caractère endommageant, correspondant à l'amplitude de variation de pression ayant été calculée,
au cours d'une autre étape de calcul, on calcule par le dispositif de traitement un ratio de potentiel d'endommagement, égal à un nombre de sollicitations de référence déterminé, divisé par le nombre admissible de sollicitations en pression à caractère endommageant ayant été calculé,
au cours d'une étape de comptage, on incrémente un compteur de cumul de ratios de potentiel d'endommagement par le ratio de potentiel d'endommagement ayant été calculé.

Suivant un mode de réalisation de l'invention, en cas de valeurs de pression manquantes entre des valeurs de pression présentes, qui sont espacées temporellement, l'on insère des valeurs de pression de remplacement variant d'une manière linéaire entre ces valeurs de pression présentes.

Suivant un mode de réalisation de l'invention, les données de mesure comportent des valeurs d'une autre pression hydraulique d'un autre équipement de l'aéronef en fonction du temps, ayant été mesurées par un capteur de mesure prévu sur cet autre équipement avant l'étape de réception,
le procédé comportant une étape d'estimation, qui est postérieure à l'étape de réception et antérieure à l'étape de détection et au cours de laquelle on estime par un estimateur du dispositif de traitement, la pression hydraulique de l'équipement à partir des valeurs de l'autre pression hydraulique de l'autre équipement de l'aéronef.

Suivant un mode de réalisation de l'invention, au cours d'une étape d'alerte postérieure à l'étape de comptage, l'on émet vers l'extérieur par le dispositif de traitement, un message d'alerte, lorsque le cumul de ratios de potentiel d'endommagement du compteur est supérieur ou égal à un seuil prédéfini d'alerte.

Suivant un mode de réalisation, pouvant être prévu pour le dispositif de surveillance et/ou pour le procédé de surveillance, l'équipement hydraulique comprend un échangeur de chaleur, faisant partie d'un circuit hydraulique de circulation d'un fluide hydraulique d'une turbomachine, le circuit hydraulique étant positionné dans le flux gazeux secondaire de la turbomachine situé entre une nacelle et un carter de la turbomachine pour refroidir le fluide hydraulique.

Suivant un mode de réalisation, pouvant être prévu pour le dispositif de surveillance et/ou pour le procédé de surveillance, le seuil déterminé d'endommagement est supérieur ou égal à 15 % d'une pression hydraulique, maximale et nominale de l'équipement hydraulique et est inférieur ou égal à 35 % de la pression hydraulique, maximale et nominale.

Suivant un mode de réalisation, pouvant être prévu pour le dispositif de surveillance et/ou pour le procédé de surveillance, la courbe prescrite décroissante de modèle d'endommagement comporte une courbe exponentielle ou linéaire décroissante, donnant le nombre admissible de sollicitations en pression à caractère endommageant en fonction de l'amplitude de variation de pression.

Suivant un mode de réalisation, pouvant être prévu pour le dispositif de surveillance et/ou pour le procédé de surveillance, la courbe prescrite décroissante de modèle d'endommagement comporte une partie de courbe décroissante, dépendant de l'inverse de l'amplitude de variation de pression pour donner le nombre admissible de sollicitations en pression à caractère endommageant.

L'invention sera mieux comprise à la lecture de la description qui va suivre, donnée uniquement à titre d'exemple non limitatif en référence aux dessins annexés, sur lesquels :

- la figure 1 représente schématiquement une vue en coupe longitudinale d'un exemple de turboréacteur, sur lequel se trouve l'équipement pouvant être soumis au dispositif et au procédé de surveillance suivant l'invention,
- la figure 2 représente schématiquement un exemple de circuit hydraulique de lubrification du turboréacteur de la figure 1, comportant l'équipement pouvant être soumis au dispositif et au procédé de surveillance suivant l'invention,
- la figure 3 représente schématiquement une vue en perspective d'un exemple de l'équipement pouvant être soumis au dispositif et au procédé de surveillance suivant l'invention selon la figure 1,
- la figure 4 est un diagramme représentant schématiquement un exemple de sollicitations en pression à caractère endommageant, pouvant être détectées par le dispositif et le procédé de surveillance suivant l'invention,
- la figure 5 est un diagramme représentant schématiquement un exemple d'un modèle d'endommagement, donnant un nombre admissible de cycles de sollicitation en pression à caractère endommageant en abscisses en fonction de l'amplitude de variation de pression en ordonnées, pouvant être utilisé par le dispositif et le procédé de surveillance suivant l'invention,
- la figure 6 représente un exemple d'organigramme du procédé de surveillance suivant l'invention,
- la figure 7 représente schématiquement un exemple du dispositif de surveillance suivant l'invention,
- la figure 8 représente schématiquement un autre équipement sur lequel sont effectuées des mesures de pression pour le dispositif et le procédé de surveillance suivant l'invention,
- la figure 9 est un diagramme représentant schématiquement un exemple d'un cycle de pression, dans lequel des données sont manquantes, qui peut être détecté par le dispositif et le procédé de surveillance suivant l'invention, et
- la figure 10 est un diagramme représentant schématiquement un exemple d'un cycle de pression, qui peut être détecté par le dispositif et le procédé de surveillance suivant l'invention et dans lequel des données manquantes ont été remplacées suivant un mode de réalisation de l'invention.

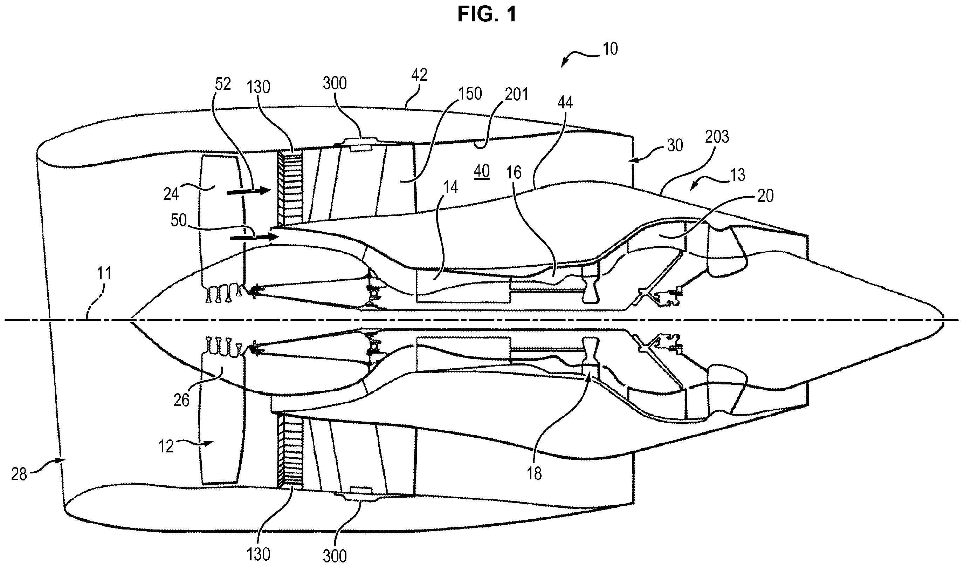

Aux figures 1, 2 et 3, un équipement hydraulique d'un aéronef soumis à des variations de pression hydraulique en vol et auquel peut s'appliquer l'invention peut comprendre par exemple un échangeur 130 de chaleur, faisant partie d'un circuit hydraulique 100 de circulation d'un fluide hydraulique servant au fonctionnement en vol d'une turbomachine 10 ou ensemble moteur à turbine à gaz 10 d'un aéronef tel que par exemple un avion. Le circuit hydraulique 100 est par exemple positionné dans le conduit de dérivation 40 du flux gazeux secondaire 52 de la turbomachine 10, situé entre une nacelle 42 et une partie externe 44 ou carter 44 du moteur central 13 de la turbomachine 10, pour refroidir le fluide hydraulique, et est par exemple de forme annulaire.

On décrit d'abord ci-dessous plus en détails cet exemple d'équipement hydraulique 130 en référence aux figures 1, 2 et 3.

A la figure 1, l'ensemble moteur à turbine à gaz 10 a un axe longitudinal 11. L'ensemble moteur à turbine à gaz 10 comprend un ensemble de soufflante 12 et un moteur à turbine à gaz central 13. Le moteur à turbine à gaz central 13 comprend un compresseur haute pression 14, une chambre de combustion 16 et une turbine haute pression 18. L'ensemble moteur à turbine à gaz 10 peut également comprendre une turbine basse pression 20. L'ensemble de soufflante 12 comprend un réseau de pales de soufflante 24 s'étendant radialement vers l'extérieur depuis un disque de rotor 26. L'ensemble moteur 10 a un côté d'admission 28 et un côté d'échappement 30. L'ensemble moteur à turbine à gaz 10 comprend également une pluralité d'ensembles de paliers (non représentés sur les figures) utilisés pour fournir un support rotatif et axial à l'ensemble de soufflante 12, au compresseur haute pression 14, à la turbine haute pression 18 et à la turbine basse pression 20, par exemple.

En fonctionnement, l'air s'écoule à travers l'ensemble de soufflante 12 et une première partie 50 (flux primaire 50) du flux d'air est acheminée à travers le compresseur haute pression 14, dans lequel le flux d'air est comprimé et envoyé à la chambre de combustion 16. Les produits de combustion chauds (non représentés sur les figures) provenant de la chambre de combustion 16 sont utilisés pour entraîner les turbines 18 et 20 et produire ainsi la poussée de l'ensemble moteur à turbine à gaz 10. L'ensemble moteur à turbine à gaz 10 comprend également un conduit de dérivation 40 qui est utilisé pour faire passer une seconde partie 52 (flux secondaire 52) du flux d'air évacué de l'ensemble de soufflante 12 autour du moteur à turbine à gaz central 13. Plus précisément, le conduit de dérivation 40 s'étend entre une paroi interne 201 d'un carénage de soufflante 42 ou nacelle 42 et une paroi externe 203 du séparateur 44 entourant le moteur à turbine à gaz central 13.

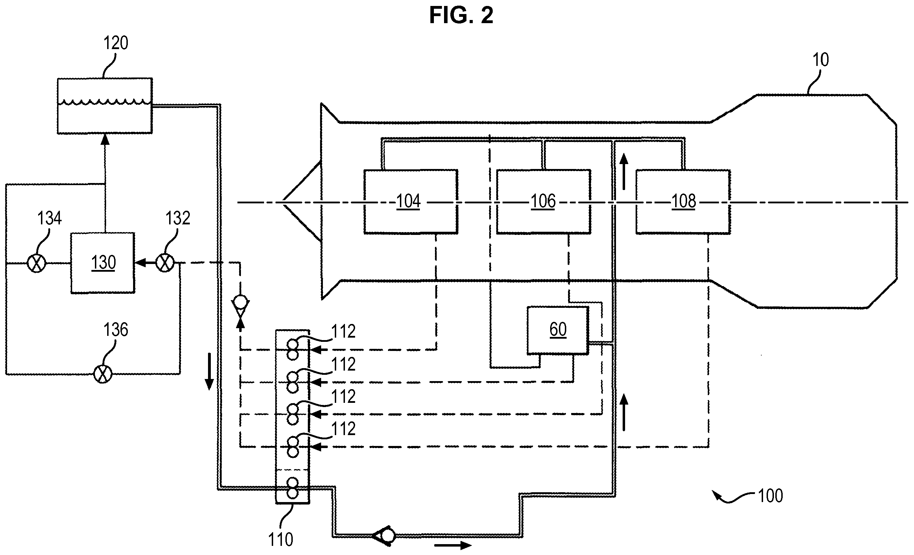

La figure 2 est une illustration schématique simplifiée d'un exemple de circuit hydraulique 100 d'alimentation en fluide hydraulique de lubrification, tel que par exemple de l'huile, qui peut être utilisé dans l'ensemble de moteur à turbine à gaz 10 de la figure 1. Dans l'exemple de réalisation, le système 100 comprend une source d'alimentation en huile 120, une ou plusieurs pompes 110 et 112 qui font circuler l'huile dans des paliers 104, 106, 108 du moteur à turbine à gaz central 13 et dans ses engrenages 60 et renvoient l'huile chaude via l'échangeur 130 de chaleur qui refroidit l'huile à une température inférieure. Éventuellement, l'échangeur de chaleur 130 comprend une soupape d'admission 132 et une soupape de sortie 134 et une soupape de dérivation 136 qui peuvent être actionnées manuellement ou électriquement.

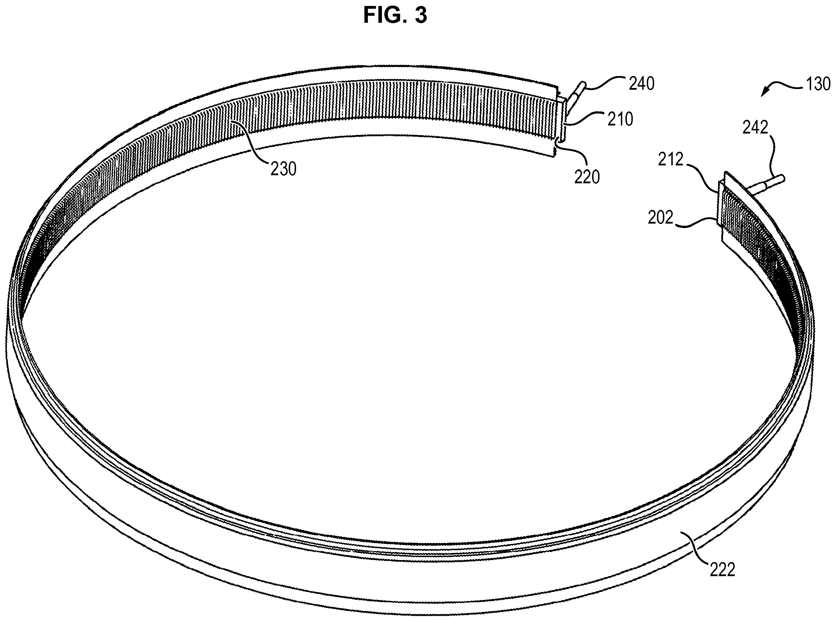

Dans l'exemple représenté à la figure 1, l'échangeur de chaleur 130 est un échangeur de chaleur à refroidissement par air qui est positionné dans le conduit de dérivation 40. L'échangeur de chaleur 130 est couplé à la paroi intérieure 201 du carénage de soufflante 42 entre l'ensemble de soufflante 12 et une entretoise de soufflante 150. Dans d'autres modes de réalisation non représentés, l'échangeur de chaleur 130 peut être couplé à la paroi interne 201, en amont de l'ensemble de soufflante 12 et en aval du côté d'admission 28. En tant que tel, l'échangeur de chaleur 130 peut être positionné n'importe où le long de la longueur axiale du conduit de dérivation 40 soit sur le côté intérieur du carénage de soufflante 42, soit sur la paroi externe 203 du séparateur 44. A la figure 3, lors de l'assemblage, l'échangeur de chaleur 130 est courbé de telle sorte que l'ensemble d'échangeur de chaleur 130 présente un profil circonférentiel et axial sensiblement similaire au profil circonférentiel et axial d'au moins une partie du conduit 40 de dérivation, par exemple conforme au profil circonférentiel et axial de la surface intérieure 201 du carénage de soufflante 42 comme représenté à la figure 1 ou la surface extérieure 203 du séparateur 44 dans d'autres réalisations non représentées.

Comme représenté sur la figure 3, l'échangeur de chaleur 130 recouvre sensiblement la totalité (environ 320 °) de la circonférence. En variante, l'échangeur de chaleur peut être formé de plusieurs segments, qui sont montés bout à bout pour couvrir la même longueur circonférentielle.

A la figure 3, l'échangeur de chaleur 130 comprend une partie de collecteur 202 s'étendant entre une première extrémité 210 et une seconde extrémité opposée 212. La partie de collecteur 202 comprend également une surface radialement interne 220, une surface radialement externe 222, telle que la partie de collecteur 202 présente un profil de section transversale axiale sensiblement rectangulaire. La partie formant collecteur 202 comprend également une pluralité d'ailettes de refroidissement 230 s'étendant radialement vers l'intérieur depuis la surface intérieure 220 dans le cas de la figure 1, pour être tournée vers le flux secondaire 52. Bien entendu, les ailettes 230 peuvent être situées sur la surface extérieure 222, par exemple dans les réalisations où l'échangeur 130 de chaleur est monté sur la surface extérieure 203 du séparateur 44 ou sur la surface extérieure du carénage de soufflante 42. Bien entendu, les ailettes 230 peuvent être situées à la fois sur la surface extérieure 222 et sur la surface intérieure 220.

La partie de collecteur 202 renferme également au moins un canal de passage du fluide hydraulique s'étendant dans la partie de collecteur 202 entre ses extrémités 210 et 212. Ce canal de passage du fluide hydraulique est relié à au moins une connexion 240 d'entrée de fluide hydraulique, qui est située à l'extrémité 210 et qui est couplée en aval de la vanne 132 (représentée sur la figure 2) et au moins une connexion de sortie 242 de fluide hydraulique, qui est située à l'extrémité 212 et qui est couplée en amont de la vanne 134 (représentée sur la figure 2), de sorte que les vannes 132 et 134 puissent être actionnées pour faire circuler le fluide de lubrification du système 100 à travers le canal de l'échangeur de chaleur 130. Le fluide hydraulique circulant dans l'échangeur de chaleur 130 cède une partie de sa chaleur à la partie 202 de collecteur entourant le canal, cette partie 202 de collecteur cédant par l'intermédiaire des ailettes 230 une partie de la chaleur reçue au flux secondaire d'air passant dans le conduit 40 de dérivation ou à l'air passant à l'extérieur du carénage 42.

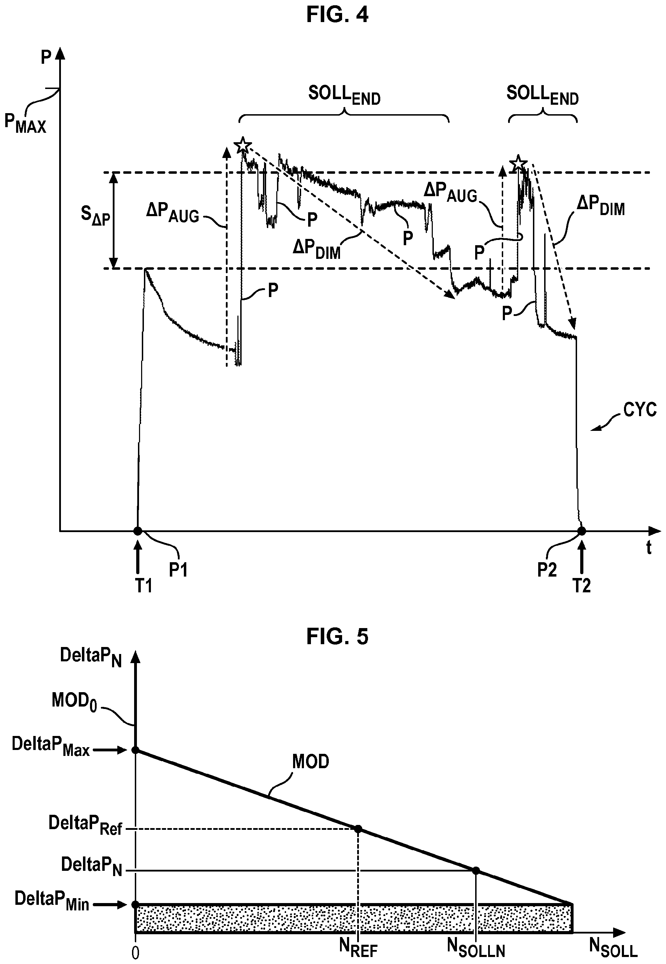

On décrit d'abord ci-dessous en référence aux figures 4 à 10 des modes de réalisation du dispositif 400 de surveillance de durée de vie de l'équipement hydraulique suivant l'invention et du procédé de surveillance de durée de vie de l'équipement hydraulique suivant l'invention, ayant les étapes mentionnées ci-dessous. Bien entendu, le dispositif 400 de surveillance de durée de vie de l'équipement hydraulique suivant l'invention et le procédé de surveillance de durée de vie de l'équipement hydraulique suivant l'invention peuvent s'appliquer à tout équipement hydraulique d'un aéronef soumis en vol à des variations de pression hydraulique, cet équipement pouvant être différent de l'échangeur de chaleur 130 décrit ci-dessus et étant désigné d'une manière générale ci-dessous par équipement hydraulique 130.

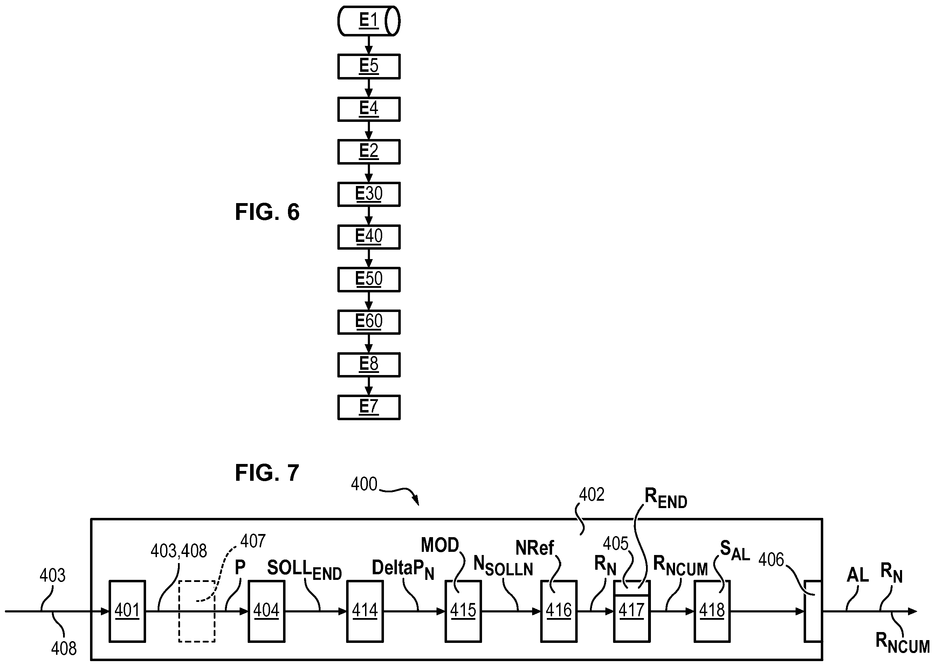

Ainsi qu'illustré aux figures 6 et 7, le dispositif 400 de surveillance de durée de vie de l'équipement hydraulique suivant l'invention et le procédé de surveillance de durée de vie de l'équipement hydraulique suivant l'invention sont destinés à traiter des données 403 de mesure, qui ont été acquises au cours d'un vol sur l'aéronef et qui sont représentatives de la pression hydraulique P (par exemple dans l'exemple décrit ci-dessus aux figures 1 à 3, la pression P d'huile interne de l'équipement hydraulique 130) de l'équipement hydraulique 130 en fonction du temps t au cours de ce vol, pour traiter ces données 403 au sol après le vol. Le dispositif 400 comporte ainsi une interface 401 de réception pour recevoir les données 403 de mesure (ou données d'entrée), au cours d'une première étape E1 de réception. Le dispositif 400 est configuré pour mettre en œuvre le procédé de surveillance de durée de vie de l'équipement hydraulique.

Le dispositif 400 comporte un dispositif 402 de traitement connecté à l'interface 401 de réception. Le dispositif 400 et le procédé de surveillance de durée de vie sont mis en œuvre par des moyens automatiques. Le dispositif 402 de traitement et les moyens décrits peuvent être mis en œuvre par un processeur ou un calculateur ou un ordinateur ou un serveur, qui sont munis de programmes informatiques de traitement pour effectuer les traitements décrits ci-dessous et de mémoires permanentes pour y enregistrer les données 403 de mesure et les traitements effectués, l'interface 401 pouvant être un port d'accès de ceux-ci.

Le dispositif 402 de traitement comporte un détecteur 404 pour détecter, à partir des données 403 de mesure au cours d'une deuxième étape E2 de détection postérieure à la première étape E1 de réception, une sollicitation $SOLL_{END}$ en pression P à caractère endommageant, appelée ci-après sollicitation $SOLL_{END}$ en pression endommageante.

Ainsi que cela est illustré à la figure 4 montrant en ordonnées une courbe de pression P en fonction du temps t en abscisse, la sollicitation $SOLL_{END}$ en pression P à caractère endommageant est détectée par le fait que la pression P comporte une augmentation $\Delta P_{AUG}$ de pression, supérieure à un seuil déterminé $S_{\Delta P}$ d'endommagement, cette augmentation $\Delta P_{AUG}$ de pression étant suivie d'une diminution $\Delta P_{DIM}$ de pression supérieure au seuil déterminé $S_{\Delta P}$ d'endommagement. Le seuil $S_{\Delta P}$ déterminé d'endommagement est un seuil de fatigue de l'équipement hydraulique 130 et a été déterminé au préalable. Le seuil $S_{\Delta P}$ déterminé d'endommagement est positif et non nul. L'augmentation $\Delta P_{AUG}$ de pression et la diminution $\Delta P_{DIM}$ de pression sont prises chacune en valeur absolue.

Un cycle CYC de pression P de l'équipement hydraulique 130 en vol commence à un certain instant T1 de début par une première valeur prescrite P1 de pression et se termine à un certain instant T2 de fin par une deuxième valeur prescrite P2 de pression. Le cycle CYC de pression P peut comporter aucune, une ou plusieurs sollicitations $SOLL_{END}$ en pression P à caractère endommageant, après avoir pris la première valeur prescrite P1 de pression de début de cycle et avant de prendre la deuxième valeur prescrite P2 de pression de fin de cycle postérieure à la première valeur prescrite P1 de pression. Par exemple, à la figure 4, deux sollicitations $SOLL_{END}$ en pression P à caractère endommageant sont détectées. A la figure 4, le maximum de la pression P séparant l'augmentation $\Delta P_{AUG}$ de la diminution $\Delta P_{DIM}$ est représentée par une étoile.

Le dispositif 402 de traitement comporte un moyen 414 de calcul pour calculer, au cours d'une étape E30 de calcul postérieure à l'étape E2 de détection, une amplitude $DeltaP_N$ de variation de pression, égale au maximum de la valeur absolue de l'augmentation $\Delta P_{AUG}$ de pression de la sollicitation $SOLL_{END}$ en pression P à caractère endommageant ayant été détectée et de la valeur absolue de la diminution $\Delta P_{DIM}$ de pression de la sollicitation $SOLL_{END}$ en pression P à caractère endommageant, qui suit cette augmentation $\Delta P_{AUG}$ de pression.

Le dispositif 402 de traitement comporte un moyen 415 de projection comportant un modèle d'endommagement sous la forme d'une fonction $DeltaP_N = f(N_{SOLL})$ donnant un nombre admissible $N_{SOLL}$ de sollicitations en pression P à caractère endommageant en fonction de l'amplitude $DeltaP_N$ de variation de pression.

Un exemple d'un tel modèle MOD d'endommagement est illustré à la figure 5, comportant une droite prescrite décroissante MOD de modèle d'endommagement, donnant le nombre admissible $N_{SOLL}$ de sollicitations en pression P à caractère endommageant en fonction de l'amplitude $DeltaP_N$ de variation de pression. Par exemple, la droite prescrite décroissante MOD de modèle d'endommagement est sous la forme de la fonction affine suivante:

$$DeltaP_N = A. N_{SOLL} + B,$$

où A est un nombre réel négatif, non nul et prescrit, et B est un nombre réel positif, non nul et prescrit.

Le modèle peut être autre que l'exemple de la figure 5, par exemple sous la forme d'une courbe prescrite décroissante MOD de modèle d'endommagement, donnant le nombre admissible $N_{SOLL}$ de sollicitations en pression P à caractère endommageant en fonction de l'amplitude $DeltaP_N$ de variation de pression.

Dans un autre exemple, la courbe prescrite décroissante MOD de modèle d'endommagement est sous la forme de la fonction suivante:

$$DeltaP_N = C . \exp (-D \times N_{SOLL} + E) + F,$$

où C est un nombre réel positif, non nul et prescrit, D est un nombre réel positif, non nul et prescrit, E et F sont des nombres réels prescrits.

Dans un autre exemple, la courbe prescrite décroissante MOD de modèle d'endommagement comporte une partie de courbe décroissante, dépendant de l'inverse de l'amplitude $DeltaP_N$ de variation de pression pour donner le nombre admissible $N_{SOLL}$ de sollicitations en pression P à caractère endommageant. La courbe MOD peut être sous la forme de la fonction suivante:

$$DeltaP_N = G / N_{SOLL} + H,$$

où G est un nombre réel positif, non nul et prescrit, H est un nombre réel prescrit.

Le moyen 415 de projection est prévu pour projeter, au cours d'une étape E40 de projection postérieure à l'étape E30 de calcul, l'amplitude $DeltaP_N$ de variation de pression ayant été calculée lors de l'étape E30, sur la courbe prescrite décroissante MOD de modèle d'endommagement ou droite prescrite décroissante MOD de modèle d'endommagement, pour déterminer le nombre admissible $N_{SOLLN}$ de sollicitations en pression P à caractère endommageant correspondant à cette amplitude $DeltaP_N$ de variation de pression ayant été calculée.

D'une manière générale, quelle que soit la forme de la fonction, le modèle d'endommagement $DeltaP_N = f(N_{SOLL})$ est caractérisé par les pressions spécifiques suivantes :

- $DeltaP_{Max}$ : amplitude $DeltaP_N$ de variation de pression à partir de laquelle l'équipement présente une déformation plastique dès la première sollicitation $SOLL_{END}$ ; à $DeltaP_{Max}$ on suppose que la durée de vie de l'équipement 130 est entièrement consommée.

- $DeltaP_{Ref}$ : amplitude $DeltaP_N$ de variation de pression de référence ; pour $DeltaP_{Ref}$, on suppose que la durée de vie de l'équipement est égale à un nombre admissible $N_{SOLL}$ de sollicitations en pression P à caractère endommageant, qui est prescrit et qui est appelé nombre NRef de sollicitations de référence.

- $DeltaP_{Min}$ : amplitude $DeltaP_N$ de variation de pression en-dessous de laquelle les amplitudes $DeltaP_N$ de variation de pression ne sont pas prises en compte car jugées non endommageantes pour l'équipement 130 considéré. Il s'agit du seuil $S_{\Delta P}$ déterminé d'endommagement permettant de détecter une sollicitation $SOLL_{END}$ en pression P à caractère endommageant. On a donc $DeltaP_{Min} = S_{\Delta P}$.

Le dispositif 402 de traitement comporte un moyen 416 de calcul pour calculer, au cours d'une autre étape E50 de calcul, un ratio $R_N$ de potentiel d'endommagement, égal au nombre NRef de sollicitations de référence, divisé par le nombre admissible $N_{SOLLN}$ de sollicitations en pression P à caractère endommageant, ayant été calculé, à savoir :

$$R_N = NRef / N_{SOLLN}$$

Le procédé et le dispositif de surveillance suivant l'invention permettent ainsi d'estimer la sévérité des sollicitations $SOLL_{END}$ rencontrées sur le vol.
La sollicitation $SOLL_{END}$ en pression P à caractère endommageant, l'amplitude $DeltaP_N$ de variation de pression et le nombre admissible $N_{SOLLN}$ de sollicitations en pression P à caractère endommageant et le ratio $R_N$

d'endommagement sont associés au vol de l'aéronef au cours duquel les données 403 et/ou 408 de mesure ont été acquises.
Le dispositif 402 de traitement comporte un moyen 417 pour incrémenter, au cours d'une étape E60 de comptage, un compteur 405 du cumul $R_{NCUM}$ de ratios $R_N$ de potentiel d'endommagement. Le compteur 405 du cumul $R_{NCUM}$ est incrémenté par le ratio $R_N$ de potentiel d'endommagement, qui a été calculé lors de l'étape E50 pour le vol correspondant aux données 405 et/ou 408. Le ratio $R_N$ permet ainsi un suivi du vol en permettant de quantifier la sévérité des sollicitations $SOLL_{END}$ en pression subies par l'équipement au cours du vol. Le compteur 405 permet ainsi un suivi du vol en tenant compte des vols précédents. Le compteur 405 fournit ainsi un cumul $R_{NCUM}$ de ratios $R_N$ de potentiel d'endommagement pour ce vol et les vols précédents.
Le compteur 405 de ratios d'endommagement cumulés est ainsi un compteur de sollicitations $SOLL_{END}$ pondérées en pression, qui calcule et cumule au cours de la vie de l'équipement 130 un nombre de sollicitations équivalentes à des conditions de référence en pression pour chaque sollicitation $SOLL_{END}$ en pression détectée au cours des vols. Chaque sollicitation $SOLL_{END}$ est pondérée par rapport à son amplitude $DeltaP_N$ de variation de pression, de manière à ramener la sollicitation $SOLL_{END}$ dans des conditions de référence.
Ces conditions de référence correspondent à l'amplitude $DeltaP_{Ref}$ de variation de pression de référence associée au nombre NRef de sollicitations $SOLL_{END}$ en pression P à caractère endommageant que l'équipement peut supporter à cette amplitude avant sa défaillance (pouvant se manifester par l'apparition de criques, de ruptures...). Les conditions de référence choisies $DeltaP_{Ref}$ correspondent à une pression pour laquelle le nombre de sollicitations admissibles $NRef = N_{SOLLN}$ que l'équipement peut supporter avant sa défaillance est connu ; NRef aura par exemple été démontré lors des tests de certification ou de qualification de l'équipement 130. Il est toutefois possible de définir une autre référence (pression, nombre de sollicitations) pourvu qu'elle soit la même pour toutes les sollicitations $SOLL_{END}$ comptabilisées. La pondération de chaque sollicitation $SOLL_{END}$ par rapport à ces conditions de pression de référence permet ainsi d'établir le compteur cumulé 405 qu'il est possible de comparer au nombre NRef de sollicitations de référence. Le cumul $R_{NCUM}$ de ratios $R_N$ de potentiel d'endommagement calculé par le compteur 405 représente un potentiel d'endommagement ramené dans les conditions de l'amplitude $DeltaP_{Ref}$ de variation de pression de référence.
Ainsi, dans le cas où $DeltaP_{Min} < DeltaP_N < DeltaP_{Ref}$, le compteur 405 est incrémenté d'un ratio $R_N$ de potentiel d'endommagement inférieur à 1 par le moyen 417 d'incrémentation au cours de l'étape E60,

dans le cas où $DeltaP_N = DeltaP_{Ref}$, le compteur est incrémenté d'un ratio $R_N$ de potentiel d'endommagement égal à 1 par le moyen 417 d'incrémentation au cours de l'étape E60,

dans le cas où $DeltaP_{Ref} < DeltaP_N < DeltaP_{Max}$, le compteur est incrémenté d'un ratio $R_N$ de potentiel d'endommagement supérieur à 1 par le moyen 417 d'incrémentation au cours de l'étape E60.

Suivant un mode de réalisation, dans le cas où $DeltaP_N \leq DeltaP_{Min}$, le compteur 405 n'est pas incrémenté par le moyen 417 d'incrémentation au cours de l'étape E60.

Suivant un mode de réalisation, dans le cas où $DeltaP_N \geq DeltaP_{Max}$, le nombre admissible $N_{SOLLN}$ de sollicitations en pression P à caractère endommageant est égal à 0, ainsi que représenté par la droite $MOD_0$ illustrée à la figure 5. Dans ce cas, le compteur 405 est incrémenté d'un ratio $R_N$ de potentiel d'endommagement « infini » (car $N_{SOLLN} = 0$) ou égal à une valeur prescrite $R_{END}$ d'endommagement atteint, choisie arbitrairement très grande, par le moyen 417 d'incrémentation au cours de l'étape E60, la durée de vie de l'équipement 130 est considérée comme intégralement consommée. Cette valeur prescrite $R_{END}$ d'endommagement atteint est par exemple choisie à une valeur finie, supérieure ou égale à un seuil $S_{AL}$ prédéfini d'alerte.

Suivant un mode de réalisation de l'invention, le dispositif 402 de traitement comporte un moyen 418 d'alerte pour émettre vers l'extérieur, au cours d'une étape E8 d'alerte postérieure à l'étape E60, un message AL d'alerte, lorsque le cumul $R_{NCUM}$ de ratios $R_N$ de potentiel d'endommagement est supérieur ou égal au seuil $S_{AL}$ prédéfini d'alerte, ainsi que cela est représenté à la figure 7. Ainsi, par exemple, le cas où $DeltaP_N \geq DeltaP_{Max}$ déclenchera par le moyen 418 d'alerte l'émission du message AL d'alerte.

Ce compteur 405 rend ainsi compte des différentes augmentations/chutes transitoires de la pression P dans l'équipement 130 au cours de sa vie, ramenées dans les conditions équivalentes aux conditions de référence. C'est un compteur fin permettant de statuer sur l'état d'endommagement mécanique de l'équipement 130, puisqu'il permet de comparer le nombre admissible $N_{SOLLN}$ de sollicitations en pression P à caractère endommageant au nombre de cycles théoriquement admissibles NRef, associé à l'amplitude $DeltaP_{Ref}$ de variation de pression de référence.

Le cumul $R_{NCUM}$ de ratios $R_N$ de potentiel d'endommagement, calculé par ce compteur 405 n'est pas nécessairement un nombre entier ; le cumul $R_{NCUM}$ est à interpréter comme le nombre de sollicitations $SOLL_{END}$ en pression P à caractère endommageant auxquelles l'équipement 130 aurait été soumis en ne réalisant que des sollicitations $SOLL_{END}$ à l'amplitude $DeltaP_{Ref}$ de variation de pression de référence.

Suivant un mode de réalisation de l'invention, le seuil $S_{\Delta P}$ déterminé d'endommagement est supérieur ou égal à 15 % d'une pression hydraulique, maximale et nominale $P_{MAX}$ de l'équipement hydraulique et est inférieur ou égal à 35 % de la pression hydraulique, maximale et nominale $P_{MAX}$. Le seuil $S_{\Delta P}$ déterminé d'endommagement peut être notamment supérieur ou égal à 20 % de $P_{MAX}$ et inférieur ou égal à 30 % de $P_{MAX}$. Par exemple, le seuil $S_{\Delta P}$ déterminé d'endommagement peut être égal à sensiblement 25 % de $P_{MAX}$.

Le seuil $S_{\Delta P}$ déterminé d'endommagement, le modèle MOD, $DeltaP_{Ref}$, NRef, $DeltaP_{Min}$, $DeltaP_{Max}$, $S_{AL}$, la première valeur prescrite P1 de pression et la deuxième valeur prescrite P2 de pression font partie des paramètres de configuration du procédé et du dispositif 400 et sont préenregistrés dans une mémoire du dispositif 402 de traitement. L'amplitude $DeltaP_N$ et/ou le nombre $N_{SOLLN}$ et/ou le ratio $R_N$ et/ou le cumul $R_{NCUM}$, ayant été calculés, sont enregistrés dans une mémoire du dispositif 402 de traitement, qui est mise à jour à chaque exécution. Le dispositif 402 de traitement peut comporter une interface 406 de sortie (pouvant être un écran de visualisation ou autres) pour fournir à l'extérieur, au cours d'une étape E7 de sortie postérieure à l'étape E8 ou E60, comme données de sortie l'amplitude $DeltaP_N$ et/ou le nombre $N_{SOLLN}$ et/ou le ratio $R_N$ et/ou le cumul $R_{NCUM}$, ayant été calculés et/ou le message AL d'alarme, et éventuellement d'autres indicateurs, comme le seuil $S_{\Delta P}$ déterminé d'endommagement, le modèle MOD, $DeltaP_{Ref}$, NRef, $DeltaP_{Min}$, $DeltaP_{Max}$, $S_{AL}$, la première valeur prescrite P1 de pression et la deuxième valeur prescrite P2 de pression.

Suivant un mode de réalisation de l'invention, ces paramètres de configuration sont prédéfinis en fonction des matériaux de l'équipement hydraulique 130 et de sa structure. Ces paramètres de configuration peuvent être fixés pour un même type d'équipement hydraulique 130 et/ou pour un même type d'aéronef. Suivant un mode de réalisation de l'invention, le seuil $S_{\Delta P}$ déterminé d'endommagement peut être variable au cours de la vie de l'équipement 130.

Suivant un mode de réalisation de l'invention, la première valeur prescrite P1 de pression et la deuxième valeur prescrite P2 de pression sont sensiblement nulles. La première valeur prescrite P1 de pression peut correspondre à une valeur de pression de l'équipement hydraulique 130 à l'arrêt du turboréacteur au début du vol ou au ralenti du turboréacteur peu après le début du vol, auquel cas la première valeur prescrite P1 de pression n'est pas nulle. La deuxième valeur prescrite P2 de pression peut correspondre à une valeur de pression de l'équipement hydraulique 130 à l'arrêt du turboréacteur à la fin du vol ou au ralenti du turboréacteur peu avant la fin du vol, auquel cas la deuxième valeur prescrite P2 de pression n'est pas nulle.

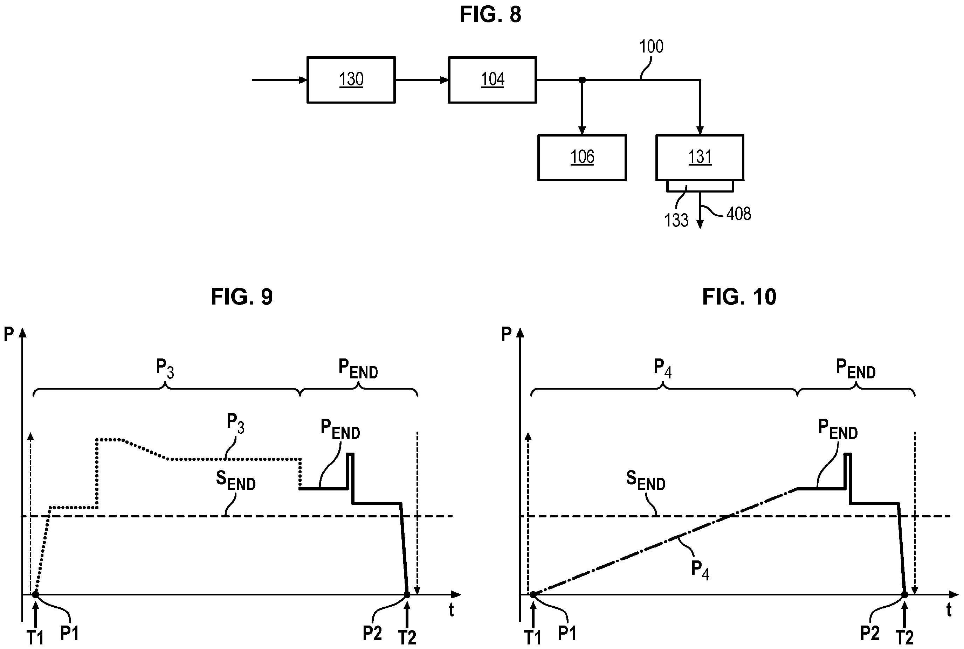

Suivant un mode de réalisation de l'invention, représenté aux figures 7 et 8, l'équipement hydraulique 130 peut ne pas être muni d'un capteur de pression pour mesurer sa pression hydraulique P. Dans ce cas, le dispositif 402 de traitement comporte un estimateur 407 pour déterminer, au cours d'une étape E4 d'estimation postérieure à l'étape E1 de réception et antérieure à l'étape E2 de détection, la pression hydraulique P de l'équipement 130 à partir des valeurs 408 d'une autre pression hydraulique d'un autre équipement 131 de l'aéronef en fonction du temps t, qui sont comprises dans les données 403 de mesure et qui ont été mesurées par un capteur 133 de mesure prévu sur cet autre équipement. Cet autre équipement 131 peut par exemple faire partie du même circuit hydraulique 100 que l'équipement hydraulique 100 de la figure 2, le capteur 133 permettant par exemple de mesurer la pression d'huile interne du moteur central 13 de la turbomachine 10 et étant prévu sur ce moteur 13. L'estimateur 407 peut comporter un modèle hydraulique préenregistré ou une fonction préenregistrée permettant de calculer ou prédire la pression hydraulique P de l'équipement 130 à partir des valeurs 408 de l'autre pression hydraulique de l'autre équipement 131. Cela présente l'avantage de n'avoir aucun impact sur la conception, la masse, les performances ou le coût de l'équipement hydraulique.

Dans un autre mode de réalisation de l'invention non représenté, un l'équipement hydraulique 130 est muni d'un capteur de mesure permettant de mesurer directement la pression hydraulique P de l'équipement hydraulique 130.

Il peut manquer des valeurs P3 de pression entre des valeurs de pression présentes, qui sont espacées temporellement. Par exemple, ainsi que cela est représenté à la figure 9 au cours d'un cycle CYC de pression, il peut manquer des valeurs P3 de pression entre l'instant T1 de début correspondant à la première valeur prescrite P1 de pression et une pression P présente postérieure à P1 (ou dans un autre cas non représenté entre une pression P présente antérieure à la deuxième valeur prescrite P2 de pression et l'instant T2 de fin correspondant à la deuxième valeur prescrite P2 de pression).

Suivant un mode de réalisation de l'invention, on insère, au cours d'une étape E5 de vérification des données à l'aide du détecteur 404 du dispositif 402 de traitement, des valeurs P4 de pression de remplacement, variant d'une manière linéaire, par exemple sous la forme d'une seule droite, entre ces valeurs de pression présentes P, P1 ou P2, par exemple entre l'instant T1 de début correspondant à la première valeur prescrite P1 de pression et la pression P présente, ainsi que cela est illustré à la figure 10 (ou dans l'autre cas précité, on insère par le dispositif 402 de traitement des valeurs P4 de pression de remplacement, variant d'une manière linéaire, par exemple sous la forme d'une seule droite, entre la pression P présente et l'instant de fin correspondant à la deuxième valeur prescrite de pression).

Suivant un mode de réalisation de l'invention, le procédé comporte entre l'étape E1 de réception et l'étape E2 ou E4 l'étape E5 de vérification des données 403 ou 408, par exemple pour détecter des données invalides, détecter des données manquantes et appliquer des méthodes de remplacement des données manquantes, ainsi que cela est décrit ci-dessus en référence aux figures 9 et 10. Les données 403, 408 peuvent comporter en plus des mesures de pression P et des mesures du temps t, le numéro de série du moteur, le nombre de vols comptés par un autre compteur du turboréacteur, un numéro de série de l'équipement hydraulique suivi, un historique des mesures de pression P.

Suivant un mode de réalisation de l'invention, le procédé comporte une étape de calcul d'un indicateur de confiance de l'amplitude DeltaP$_N$ et/ou du nombre N$_{SOLLN}$ et/ou du ratio R$_N$ et/ou du cumul R$_{NCUM}$ ayant été calculés. Cet indicateur de confiance peut être calculé comme étant une valeur numérique pondérée par la qualité des données 403 et/ou 408, estimée lors de l'étape E2 et par le nombre de données manquantes.

Bien entendu, les modes de réalisation, caractéristiques, possibilités et exemples ci-dessus peuvent être combinés l'un avec l'autre ou être sélectionnés indépendamment l'un de l'autre.

## Revendications

1. Dispositif (400) de surveillance de durée de vie d'au moins un équipement hydraulique (130) d'un aéronef soumis à des variations de pression hydraulique (P) en vol, le dispositif (400) comportant une interface (401) de réception de données (403, 408) de mesure représentatives de la pression hydraulique (P) de l'équipement (130) en fonction du temps (t) en vol,

   **caractérisé en ce que** le dispositif (400) comporte :

       un dispositif (402) de traitement, comportant un moyen (404) pour détecter, à partir des données (403, 408) de mesure, une sollicitation (SOLL$_{END}$) en pression (P) à caractère endommageant, définie par le fait que la pression (P) comporte une augmentation ($\Delta P_{AUG}$) de pression, supérieure à un seuil déterminé (S$_{\Delta P}$) d'endommagement supérieur à zéro, suivie d'une diminution ($\Delta P_{DIM}$) de pression supérieure au seuil déterminé (S$_{\Delta P}$) d'endommagement,

       un moyen (414) de calcul d'une amplitude (DeltaP$_N$) de variation de pression, égale au maximum de la valeur absolue de l'augmentation ($\Delta P_{AUG}$) de pression de la sollicitation (SOLL$_{END}$) en pression (P) à caractère endommageant et de la valeur absolue de la diminution ($\Delta P_{DIM}$) de pression de la sollicitation (SOLL$_{END}$) en pression (P) à caractère endommageant,

       un moyen (415) pour projeter l'amplitude (DeltaP$_N$) de variation de pression sur une courbe prescrite décroissante (MOD) de modèle d'endommagement ou droite prescrite décroissante (MOD) de modèle d'endommagement, donnant un nombre admissible (N$_{SOLL}$) de sollicitations en pression (P) à caractère endommageant en fonction de l'amplitude (DeltaP$_N$) de variation de pression, pour déterminer le nombre admissible ($N_{SOLLN}$) de sollicitations en pression (P) à caractère endommageant correspondant à l'amplitude ($DeltaP_N$) de variation de pression ayant été calculée,

un moyen (416) de calcul pour calculer un ratio ($R_N$) de potentiel d'endommagement, égal à un nombre (NRef) de sollicitations de référence, déterminé, divisé par le nombre admissible ($N_{SOLLN}$) de sollicitations en pression (P) à caractère endommageant ayant été calculé,

un moyen (417) pour incrémenter un compteur (405) de cumul ($R_{NCUM}$) de ratios ($R_N$) de potentiel d'endommagement par le ratio ($R_N$) de potentiel d'endommagement ayant été calculé.

2. Dispositif suivant la revendication 1, **caractérisé en ce qu'**il comporte un estimateur (407) pour déterminer la pression hydraulique (P) de l'équipement à partir de valeurs d'une autre pression hydraulique d'un autre équipement (131) de l'aéronef en fonction du temps (t), qui sont comprises dans les données (408) de mesure et qui ont été mesurées par un capteur (133) de mesure prévu sur cet autre équipement (131).

3. Dispositif suivant l'une quelconque des revendications 1 et 2, **caractérisé en ce que** l'équipement hydraulique comprend un échangeur (130) de chaleur, faisant partie d'un circuit hydraulique (100) de circulation d'un fluide hydraulique d'une turbomachine (10), le circuit hydraulique (100) étant positionné dans le flux gazeux secondaire (52) de la turbomachine situé entre une nacelle (42) et un carter (44) de la turbomachine (10) pour refroidir le fluide hydraulique.

4. Dispositif suivant l'une quelconque des revendications 1 à 3, **caractérisé en ce que** le seuil déterminé ($S_{\Delta P}$) d'endommagement est supérieur ou égal à 15 % d'une pression hydraulique, maximale et nominale ($P_{MAX}$) de l'équipement hydraulique et est inférieur ou égal à 35 % de la pression hydraulique, maximale et nominale ($P_{MAX}$).

5. Dispositif suivant l'une quelconque des revendications 1 à 4, **caractérisé en ce que** la courbe prescrite décroissante (MOD) de modèle d'endommagement comporte une courbe exponentielle ou linéaire décroissante, donnant le nombre admissible ($N_{SOLL}$) de sollicitations en pression (P) à caractère endommageant en fonction de l'amplitude ($DeltaP_N$) de variation de pression.

6. Dispositif suivant l'une quelconque des revendications 1 à 4, **caractérisé en ce que** la courbe prescrite décroissante (MOD) de modèle d'endommagement comporte une partie de courbe décroissante, dépendant de l'inverse de l'amplitude ($DeltaP_N$) de variation de pression pour donner le nombre admissible ($N_{SOLL}$) de sollicitations en pression (P) à caractère endommageant.

7. Dispositif suivant l'une quelconque des revendications 1 à 6, **caractérisé en ce que** le dispositif (402) de traitement comporte un moyen (418) d'alerte pour émettre vers l'extérieur un message (AL) d'alerte, lorsque le cumul ($R_{NCUM}$) de ratios ($R_N$) de potentiel d'endommagement du compteur (405) est supérieur ou égal à un seuil ($S_{AL}$) prédéfini d'alerte.

8. Procédé de surveillance de durée de vie d'au moins un équipement hydraulique (130) d'un aéronef soumis à des variations de pression hydraulique (P) en vol, procédé dans lequel on reçoit, au cours d'une étape (E1) de réception sur une interface (401) de réception, des données (403, 408) de mesure représentatives de la pression hydraulique (P) de l'équipement (130) en fonction du temps (t) en vol, **caractérisé en ce que**

au cours d'une étape (E2) de détection, l'on détecte par un dispositif (402) de traitement, à partir des données (403, 408) de mesure, une sollicitation ($SOLL_{END}$) en pression (P) à caractère endommageant, définie par le fait que la pression (P) comporte une augmentation ($\Delta P_{AUG}$) de pression, supérieure à un seuil déterminé ($S_{\Delta P}$) d'endommagement supérieur à zéro, suivie d'une diminution ($\Delta P_{DIM}$) de pression supérieure au seuil déterminé ($S_{\Delta P}$) d'endommagement,

au cours d'une étape (E30) de calcul, on calcule par le dispositif (402) de traitement une amplitude ($DeltaP_N$) de variation de pression, égale au maximum de la valeur absolue de l'augmentation ($\Delta P_{AUG}$) de pression de la sollicitation ($SOLL_{END}$) en pression (P) à caractère endommageant et de la valeur absolue de la diminution ($\Delta P_{DIM}$) de pression de la sollicitation ($SOLL_{END}$) en pression (P) à caractère endommageant,

au cours d'une étape (E40) de projection, on projette par le dispositif (402) de traitement l'amplitude ($DeltaP_N$) de variation de pression sur une courbe prescrite décroissante (MOD) de modèle d'endommagement ou droite prescrite décroissante (MOD) de modèle d'endommagement, donnant un nombre admissible ($N_{SOLL}$) de sollicitations en pression (P) à caractère endommageant en fonction de l'amplitude ($DeltaP_N$) de variation de pression, pour déterminer le nombre admissible ($N_{SOLLN}$) de sollicitations en pression (P) à caractère endommageant, correspondant à l'amplitude ($DeltaP_N$) de variation de pression ayant été calculée,

au cours d'une autre étape (E50) de calcul, on calcule par le dispositif (402) de traitement un ratio ($R_N$) de potentiel d'endommagement, égal à un nombre (NRef) de sollicitations de référence déterminé, divisé par nombre admissible ($N_{SOLLN}$) de sollicitations en pression (P) à caractère endommageant ayant été calculé,

au cours d'une étape (E60) de comptage, on incrémente un compteur (405) de cumul ($R_{NCUM}$) de ratios ($R_N$) de potentiel d'endommagement par le ratio ($R_N$) de potentiel d'endommagement ayant été calculé.

9. Procédé suivant la revendication 8, **caractérisé en ce qu'**en cas de valeurs de pression manquantes (P3) entre des valeurs de pression (P1, P2, P) présentes, qui sont espacées temporellement, l'on insère des valeurs de pression (P4) de remplacement variant d'une manière linéaire entre ces valeurs de pression présentes (P1, P2, P).

10. Procédé suivant la revendication 8 ou 9, **caractérisé en ce que** les données (408) de mesure comportent des valeurs d'une autre pression hydraulique d'un autre équipement (131) de l'aéronef en fonction du temps (t), ayant été mesurées par un capteur (133) de mesure prévu sur cet autre équipement (131) avant l'étape (E1) de réception,

le procédé comportant une étape (E4) d'estimation, qui est postérieure à l'étape (E1) de réception et antérieure à l'étape (E2) de détection et au cours de laquelle on estime par un estimateur (407) du dispositif (402) de traitement, la pression hydraulique (P) de l'équipement à partir des valeurs de l'autre pression hydraulique de l'autre équipement (131) de l'aéronef.

11. Procédé suivant l'une quelconque des revendications 8 à 10, **caractérisé en ce que** l'équipement hydraulique comprend un échangeur (130) de chaleur, faisant partie d'un circuit hydraulique (100) de circulation d'un fluide hydraulique d'une turbomachine (10), le circuit hydraulique (100) étant positionné dans le flux gazeux secondaire (52) de la turbomachine situé entre une nacelle (42) et un carter (44) de la turbomachine (10) pour refroidir le fluide hydraulique.

12. Procédé suivant l'une quelconque des revendications 8 à 11, **caractérisé en ce que** le seuil déterminé ($S_{\Delta P}$) d'endommagement est supérieur ou égal à 15 % d'une pression hydraulique, maximale et nominale ($P_{MAX}$) de l'équipement hydraulique et est inférieur ou égal à 35 % de la pression hydraulique, maximale et nominale ($P_{MAX}$).

13. Procédé suivant l'une quelconque des revendications 8 à 12, **caractérisé en ce que** la courbe prescrite décroissante (MOD) de modèle d'endommagement comporte une courbe exponentielle ou linéaire décroissante, donnant le nombre admissible ($N_{SOLL}$) de sollicitations en pression (P) à caractère endommageant en fonction de l'amplitude ($DeltaP_N$) de variation de pression.

14. Procédé suivant l'une quelconque des revendications 8 à 12, **caractérisé en ce que** la courbe prescrite décroissante (MOD) de modèle d'endommagement comporte une partie de courbe décroissante, dépendant de l'inverse de l'amplitude ($DeltaP_N$) de variation de pression pour donner le nombre admissible ($N_{SOLL}$) de sollicitations en pression (P) à caractère endommageant.

15. Procédé suivant l'une quelconque des revendications 8 à 14, **caractérisé en ce que**, au cours d'une étape (E8) d'alerte postérieure à l'étape (E60) de comptage, l'on émet vers l'extérieur par le dispositif (402) de traitement, un message (AL) d'alerte, lorsque le cumul ($R_{NCUM}$) de ratios ($R_N$) de potentiel d'endommagement du compteur (405) est supérieur ou égal à un seuil ($S_{AL}$) prédéfini d'alerte.

**Patentansprüche**

1. Vorrichtung (400) zur Überwachung der Lebensdauer mindestens eines Hydraulikgeräts (130) eines Luftfahrzeugs, das beim Flug Schwankungen des hydraulischen Drucks (P) unterworfen ist, wobei die Vorrichtung (400) eine Schnittstelle (401) für den Empfang von Messdaten (403, 408) umfasst, die für den hydraulischen Druck (P) des Geräts (130) in Abhängigkeit von der Zeit (t) beim Flug repräsentativ sind,

**dadurch gekennzeichnet, dass** die Vorrichtung (400) umfasst:

eine Verarbeitungsvorrichtung (402), die ein Mittel (404) zum Feststellen einer Beanspruchung ($SOLL_{END}$) beschädigender Art durch Druck (P) ausgehend von den Messdaten (403, 408) umfasst, wobei die Beanspruchung ($SOLL_{END}$) durch die Tatsache definiert ist, dass der Druck (P) eine Druckerhöhung ($\Delta P_{AUG}$), die höher als eine bestimmte Beschädigungsschwelle ($S_{\Delta P}$) von größer als null ist, gefolgt von einer Druckabnahme ($\Delta P_{DIM}$) umfasst, die höher als die bestimmte Beschädigungsschwelle ($S_{\Delta P}$) ist,

ein Mittel (414) zur Berechnung einer Druckschwankungsgröße ($DeltaP_N$), die gleich dem Maximum des Absolutwerts der Druckerhöhung ($\Delta P_{AUG}$) der Beanspruchung ($SOLL_{END}$) beschädigender Art durch Druck (P) und des Absolutwerts der Druckabnahme ($\Delta P_{DIM}$) der Be-

anspruchung (SOLL$_{END}$) beschädigender Art durch Druck (P) ist,

ein Mittel (415) zum Projizieren der Größe (DeltaP$_N$) der Druckschwankung auf eine vorgeschriebene abnehmende Beschädigungsmodellkurve (MOD) oder vorgeschriebene abnehmende Beschädigungsmodellgerade (MOD), was eine zulässige Anzahl (N$_{SOLL}$) von Beanspruchungen beschädigender Art durch Druck (P) in Abhängigkeit von der Druckschwankungsgröße (DeltaP$_N$) ergibt, um die zulässige Anzahl (N$_{SOLLN}$) von Beanspruchungen beschädigender Art durch Druck (P) zu bestimmen, die der Druckschwankungsgröße (DeltaP$_N$) entspricht, die berechnet wurde,

ein Berechnungsmittel (416) zum Berechnen eines Beschädigungspotenzialverhältnisses (R$_N$) gleich einer bestimmten Anzahl (NRef) von Bezugsbeanspruchungen, geteilt durch die zulässige Anzahl (N$_{SOLLN}$) von Beanspruchungen beschädigender Art durch Druck (P), die berechnet wurde,

ein Mittel (417) zum Erhöhen eines Zählers (405) zur Summierung (R$_{NCUM}$) von Beschädigungspotenzialverhältnissen (R$_N$) durch das Beschädigungspotenzialverhältnis (R$_N$), das berechnet wurde.

2. Vorrichtung nach Anspruch 1, **dadurch gekennzeichnet, dass** sie eine Schätzungseinrichtung (407) zum Bestimmen des hydraulischen Drucks (P) des Geräts ausgehend von Werten eines anderen hydraulischen Drucks eines anderen Geräts (131) des Luftfahrzeugs in Abhängigkeit von der Zeit (t) umfasst, die in den Messdaten (408) enthalten sind und die durch einen Messsensor (133) gemessen wurden, der auf diesem anderen Gerät (131) vorgesehen ist.

3. Vorrichtung nach einem der Ansprüche 1 und 2, **dadurch gekennzeichnet, dass** das Hydraulikgerät einen Wärmetauscher (130) umfasst, der Teil eines Hydraulikkreises (100) für den Umlauf eines Hydraulikfluids einer Turbomaschine (10) ist, wobei der Hydraulikkreis (100) in der Nebengasströmung (52) der Turbomaschine positioniert ist, die sich zwischen einer Gondel (42) und einem Gehäuse (44) der Turbomaschine (10) befindet, um das Hydraulikfluid zu kühlen.

4. Vorrichtung nach einem der Ansprüche 1 bis 3, **dadurch gekennzeichnet, dass** die bestimmte Beschädigungsschwelle (S$_{\Delta P}$) höher oder gleich 15% eines maximalen und Nennhydraulikdrucks (P$_{MAX}$) des Hydraulikgeräts ist und kleiner oder gleich 35% des maximalen und Nennhydraulikdrucks (P$_{MAX}$) ist.

5. Vorrichtung nach einem der Ansprüche 1 bis 4, **da-**

**durch gekennzeichnet, dass** die vorgeschriebene abnehmende Beschädigungsmodellkurve (MOD) eine exponentielle oder lineare abnehmende Kurve umfasst, die die zulässige Anzahl (N$_{SOLL}$) von Beanspruchungen beschädigender Art durch Druck (P) in Abhängigkeit von der Druckschwankungsgröße (DeltaP$_N$) angibt.

6. Vorrichtung nach einem der Ansprüche 1 bis 4, **dadurch gekennzeichnet, dass** die vorgeschriebene abnehmende Beschädigungsmodellkurve (MOD) einen abnehmenden Kurventeil umfasst, der vom Kehrwert der Druckschwankungsgröße (DeltaP$_N$) abhängig ist, um die zulässige Anzahl (N$_{SOLL}$) von Beanspruchungen beschädigender Art durch Druck (P) anzugeben.

7. Vorrichtung nach einem der Ansprüche 1 bis 6, **dadurch gekennzeichnet, dass** die Verarbeitungsvorrichtung (402) ein Alarmmittel (418) umfasst, um eine Alarmnachricht (AL) nach außen zu senden, wenn die Summe (R$_{NCUM}$) von Beschädigungspotenzialverhältnissen (R$_N$) des Zählers (405) höher oder gleich einer vordefinierten Alarmschwelle (S$_{AL}$) ist.

8. Verfahren zur Überwachung der Lebensdauer von mindestens einem Hydraulikgerät (130) eines Luftfahrzeugs, das beim Flug Schwankungen des hydraulischen Drucks (P) unterworfen ist, wobei in dem Verfahren während eines Empfangsschritts (E1) auf einer Empfangsschnittstelle (401) Messdaten (403, 408) empfangen werden, die für den hydraulischen Druck (P) des Geräts (130) in Abhängigkeit von der Zeit (t) beim Flug repräsentativ sind,
**dadurch gekennzeichnet, dass**

während eines Feststellungsschritts (E2) durch eine Verarbeitungsvorrichtung (402) ausgehend von den Messdaten (403, 408) eine Beanspruchung (SOLL$_{END}$) beschädigender Art durch Druck (P) festgestellt wird, die durch die Tatsache definiert ist, dass der Druck (P) eine Druckerhöhung ($\Delta P_{AUG}$), die höher als eine bestimmte Beschädigungsschwelle (S$_{\Delta P}$) von größer als null ist, gefolgt von einer Druckabnahme ($\Delta P_{DIM}$) umfasst, die höher als die bestimmte Beschädigungsschwelle (S$_{\Delta P}$) ist,
während eines Berechnungsschritts (E30) durch die Verarbeitungsvorrichtung (402) eine Druckschwankungsgröße (DeltaP$_N$) gleich dem Maximum des Absolutwerts der Druckerhöhung ($\Delta P_{AUG}$) der Beanspruchung (SOLL$_{END}$) beschädigender Art durch Druck (P) und des Absolutwerts der Druckabnahme ($\Delta P_{DIM}$) der Beanspruchung (SOLL$_{END}$) beschädigender Art durch Druck (P) berechnet wird,
während eines Projektionsschritts (E40) durch die Verarbeitungsvorrichtung (402) die Druckschwankungsgröße ($\text{DeltaP}_N$) auf eine vorgeschriebene abnehmende Beschädigungsmodellkurve (MOD) oder vorgeschriebene abnehmende Beschädigungsmodellgerade (MOD) projiziert wird, was eine zulässige Anzahl ($N_{SOLL}$) von Beanspruchungen beschädigender Art durch Druck (P) in Abhängigkeit von der Druckschwankungsgröße ($\text{DeltaP}_N$) ergibt, um die zulässige Anzahl ($N_{SOLLN}$) von Beanspruchungen beschädigender Art durch Druck (P) zu bestimmen, die der Druckschwankungsgröße ($\text{DeltaP}_N$), die berechnet wurde, entspricht, während eines anderen Berechnungsschritts (E50) durch die Verarbeitungsvorrichtung (402) ein Beschädigungspotenzialverhältnis ($R_N$) gleich einer bestimmten Anzahl von Bezugsbeanspruchungen, geteilt durch die zulässige Anzahl ($N_{SOLLN}$) von Beanspruchungen beschädigender Art durch Druck (P), die berechnet wurde, berechnet wird,

während eines Zählschritts (E60) ein Zähler (405) zur Summierung ($R_{NCUM}$) von Beschädigungspotenzialverhältnissen ($R_N$) um das Beschädigungspotenzialverhältnis ($R_N$) erhöht wird, das berechnet wurde.

9. Verfahren nach Anspruch 8, **dadurch gekennzeichnet, dass** im Fall von fehlenden Druckwerten (P3) zwischen den vorhandenen Druckwerten (P1, P2, P), die zeitlich beabstandet sind, Ersatzdruckwerte (P4) eingesetzt werden, die sich auf eine lineare Weise zwischen diesen vorhandenen Druckwerten (P1, P2, P) verändern.

10. Verfahren nach Anspruch 8 oder 9, **dadurch gekennzeichnet, dass** die Messdaten (408) Werte eines anderen hydraulischen Drucks eines anderen Geräts (131) des Luftfahrzeugs in Abhängigkeit von der Zeit (t) umfassen, die durch einen Drucksensor (133), der auf diesem anderen Gerät (131) vorgesehen ist, vor dem Empfangsschritt (E1) gemessen wurden,

wobei das Verfahren einen Schätzungsschritt (E4) umfasst, der nach dem Empfangsschritt (E1) und vor dem Feststellungsschritt (E2) erfolgt und während dem durch eine Schätzungseinrichtung (407) der Verarbeitungsvorrichtung (402) der hydraulische Druck (P) des Geräts ausgehend von den Werten des anderen hydraulischen Drucks des anderen Geräts (131) des Luftfahrzeugs geschätzt wird.

11. Verfahren nach einem der Ansprüche 8 bis 10, **dadurch gekennzeichnet, dass** das Hydraulikgerät einen Wärmetauscher (130) umfasst, der Teil eines Hydraulikkreises (100) für den Umlauf eines Hydraulikfluids einer Turbomaschine (10) ist, wobei der Hydraulikkreis (100) in der Nebengasströmung (52) der Turbomaschine positioniert ist, die sich zwischen einer Gondel (42) und einem Gehäuse (44) der Turbomaschine (10) befindet, um das Hydraulikfluid zu kühlen.

12. Verfahren nach einem der Ansprüche 8 bis 11, **dadurch gekennzeichnet, dass** die bestimmte Beschädigungsschwelle ($S_{\Delta P}$) höher oder gleich 15% eines maximalen und Nennhydraulikdrucks ($P_{MAX}$) des Hydraulikgeräts ist und kleiner oder gleich 35% des maximalen und Nennhydraulikdrucks ($P_{MAX}$) ist.

13. Verfahren nach einem der Ansprüche 8 bis 12, **dadurch gekennzeichnet, dass** die vorgeschriebene abnehmende Beschädigungsmodellkurve (MOD) eine abnehmende exponentielle oder lineare Kurve umfasst, welche die zulässige Anzahl ($N_{SOLL}$) von Beanspruchungen beschädigender Art durch Druck (P) in Abhängigkeit von der Druckschwankungsgröße ($\text{DeltaP}_N$) angibt.

14. Verfahren nach einem der Ansprüche 8 bis 12, **dadurch gekennzeichnet, dass** die vorgeschriebene abnehmende Beschädigungsmodellkurve (MOD) einen abnehmenden Kurventeil umfasst, der vom Kehrwert der Druckschwankungsgröße ($\text{DeltaP}_N$) abhängig ist, um die zulässige Anzahl ($N_{SOLL}$) von Beanspruchungen beschädigender Art durch Druck (P) anzugeben.

15. Verfahren nach einem der Ansprüche 8 bis 14, **dadurch gekennzeichnet, dass** während eines Alarmschritts (E8) nach dem Zählschritt (E60) durch die Verarbeitungsvorrichtung (402) eine Alarmnachricht (AL) nach außen gesendet wird, wenn die Summierung ($R_{NCUM}$) von Beschädigungspotentialverhältnissen ($R_N$) des Zählers (405) höher oder gleich eine vordefinierte Alarmschwelle ($S_{AL}$) ist.


**Claims**

1. A device (400) for monitoring the lifetime of at least one hydraulic apparatus (130) of an aircraft subjected to variations of hydraulic pressure (P) in flight, the device (400) comprising an interface (401) for receiving measurement data (403, 408) representative of the hydraulic pressure (P) of the apparatus (130) as a function of flight time (t),
**characterized in that** the apparatus (400) comprises:

a processing device (402) comprising a means (404) for detecting, based on the measurement data (403, 408), a pressure (P) load ($SOLL_{END}$) of a damaging nature, defined by the fact that the pressure (P) comprises a pressure increase ($\Delta P_{AUG}$), greater than a predetermined damage

threshold ($S_{\Delta P}$) greater than zero, followed by a pressure reduction ($\Delta P_{DIM}$) greater than the predetermined damage threshold ($S_{\Delta P}$),

a means (414) for calculating a pressure variation amplitude ($DeltaP_N$), equal to the maximum of the absolute value of the pressure increase ($\Delta P_{AUG}$) of the pressure (P) load ($SOLL_{END}$) of a damaging nature and of the absolute value of the pressure reduction ($\Delta P_{DIM}$) of the pressure (P) load ($SOLL_{END}$) of a damaging nature,

a means (415) for projecting the pressure variation amplitude ($DeltaP_N$) onto a prescribed decreasing curve (MOD) of damage model or a prescribed decreasing straight line (MOD) of damage model, giving a permissible number ($N_{SOLL}$) of pressure (P) loads of a damaging nature as a function of the pressure variation amplitude ($DeltaP_N$), for determining the permissible number ($N_{SOLLN}$) of pressure (P) loads of a damaging nature corresponding to the pressure variation amplitude ($DeltaP_N$) which has been calculated,

a calculating means (416) for calculating a potential damage ratio ($R_N$), equal to a determined number (NRef) of reference loads, divided by the permissible number ($N_{SOLLN}$) of pressure (P) loads of a damaging nature which has been calculated,

a means (417) for incrementing a cumulative ($R_{NCUM}$) potential ratio ($R_N$) counter (405) by the potential damage ratio ($R_N$) which has been calculated.

2. The device according to claim 1, **characterized in that** it comprises an estimator (407) for determining the hydraulic pressure (P) of the apparatus based on values of another hydraulic pressure of another apparatus (131) of the aircraft as a function of time (t), which are comprised in the measurement data (408) and which have been measured by a measurement sensor (133) provided on this other apparatus (131).

3. The device according to any one of claims 1 and 2, **characterized in that** the hydraulic apparatus comprises a heat exchanger (130), forming part of a hydraulic circuit (100) for circulating a hydraulic fluid of a turbomachine (10), the hydraulic circuit (100) being positioned in the secondary gas flow (52) of the turbomachine positioned between a nacelle (42) and a casing (44) of the turbomachine (10) for cooling the hydraulic fluid.

4. The device according to any one of claims 1 to 3, **characterized in that** the predetermined damage threshold ($S_{\Delta P}$) is greater than or equal to 15 % of a maximum and nominal hydraulic pressure ($P_{MAX}$) of the hydraulic apparatus and is less than or equal to 35 % of the maximum and nominal hydraulic pressure ($P_{MAX}$).

5. The device according to anyone of claims 1 to 4, **characterized in that** the prescribed decreasing curve (MOD) of damage model comprises a decreasing exponential or decreasing linear curve giving the permissible number ($N_{SOLL}$) of pressure (P) loads of a damaging nature as a function of the pressure variation amplitude ($DeltaP_N$).

6. The device according to anyone of claims 1 to 4, **characterized in that** the prescribed decreasing curve (MOD) of damage model comprises a decreasing curve portion depending on the inverse of the pressure variation amplitude ($DeltaP_N$) for giving the permissible number ($N_{SOLL}$) of pressure (P) loads of a damaging nature.

7. The device according to any one of claims 1 to 6, **characterized in that** the processing device (402) comprises an alarm means (418) for transmitting an alarm message (AL) to the outside, when the cumulative value ($R_{NCUM}$) of potential damage ratios ($R_N$) of the counter (405) is greater than or equal to a predefined alarm threshold ($S_{AL}$).

8. A method for monitoring the lifetime of at least one hydraulic apparatus (130) of an aircraft subjected to variations of hydraulic pressure (P) in flight, a method in which are received, on a reception interface (401) during a reception step (E1), measurement data (403, 408) representative of the hydraulic pressure (P) of the apparatus (130) as a function of flight time (t),

**characterized in that**

during a detection step (E2), a pressure (P) load ($SOLL_{END}$) of a damaging nature, defined by the fact that the pressure (P) comprises a pressure increase ($\Delta P_{AUG}$), greater than a predetermined damage threshold ($S_{\Delta P}$) greater than zero, followed by a pressure reduction ($\Delta P_{DIM}$) greater than the predetermined damage threshold ($S_{\Delta P}$), is detected by a processing device (402), based on the measurement data (403, 408),

during a calculation step (E30) a pressure variation amplitude ($DeltaP_N$), equal to the maximum of the absolute value of the pressure increase ($\Delta P_{AUG}$) of the pressure (P) load ($SOLL_{END}$) of a damaging nature and of the absolute value of the pressure reduction ($\Delta P_{DIM}$) of the pressure (P) load ($SOLL_{END}$) of a damaging nature, is calculated by the processing device (402),

during a projection step (E40), the processing device (402) projects the pressure variation amplitude ($DeltaP_N$) onto a prescribed decreasing curve (MOD) of damage model or prescribed decreasing straight line (MOD) of damage model, giving a permissible number ($N_{SOLL}$) of pressure loads (P) of a damaging nature as a function of the pressure variation amplitude (Delta$P_N$), for determining the permissible number ($N_{SOLLN}$) of pressure loads (P) of a damaging nature corresponding to the pressure variation amplitude (Delta$P_N$) which has been calculated, during another calculation step (E50), the processing device (402) calculates a potential damage ratio ($R_N$) equal to a determined number (NRef) of reference loads, divided by the permissible number ($N_{SOLLN}$) of pressure (P) loads of a damaging nature which has been calculated, during a counting step (E60) a cumulative ($R_{NCUM}$) counter (405) of potential damage ratio ($R_N$) is incremented by the potential damage ratio ($R_N$) which has been calculated.

9. The method according to claim 8, **characterized in that** in case of missing pressure values (P3) between the pressure values (P1, P2, P) that are present, which are spaced over time, replacement pressure values (P4) are inserted that vary linearly between these pressure values (P1, P2, P) that are present.

10. The method according to claim 8 or 9, **characterized in that** the measurement data (408) comprise values of another hydraulic pressure of another apparatus (131) of the aircraft as a function of time (t), which has been measured by a measurement sensor (133) provided on this other apparatus (131) prior to the reception step (E1),
the method comprising an estimation step (E4), which is subsequent to the reception step (E1) and anterior to the detection step (E2) and during which an estimator (407) of the processing device (402) estimates the hydraulic pressure (P) of the apparatus based on the values of the other hydraulic pressure of the other apparatus (131) of the aircraft.

11. The method according to any one of claims 8 to 10, **characterized in that** the hydraulic apparatus comprises a heat exchanger (130), forming part of a hydraulic circuit (100) for circulating a hydraulic fluid of a turbomachine (10), the hydraulic circuit (100) being positioned in the secondary gas flow (52) of the turbomachine positioned between a nacelle (42) and a casing (44) of the turbomachine (10) for cooling the hydraulic fluid.

12. The method according to any one of claims 8 to 11, **characterized in that** the predetermined damage threshold ($S_{\Delta P}$) is greater than or equal to 15 % of a maximum and nominal hydraulic pressure ($P_{MAX}$) of the hydraulic apparatus and is less than or equal to 35 % of the maximum and nominal hydraulic pressure ($P_{MAX}$).

13. The method according to any one of claims 8 to 12, **characterized in that** the prescribed decreasing curve (MOD) of damage model comprises a decreasing exponential or decreasing linear curve, giving the permissible number ($N_{SOLL}$) of pressure loads (P) of a damaging nature as a function of the pressure variation amplitude (Delta$P_N$).

14. The method according to any one of claims 8 to 12, **characterized in that** the prescribed decreasing curve (MOD) of damage model comprises a decreasing curve portion, depending on the inverse of the pressure variation amplitude (Delta$P_N$) for giving the permissible number ($N_{SOLL}$) of pressure (P) loads of a damaging nature.

15. The method according to any one of claims 8 to 14, **characterized in that**, during an alarm step (E8) subsequent to the counting step (E60) the processing device (402) transmits an alarm message (AL) to the outside when the cumulative value ($R_{NCUM}$) of potential damage ratios ($R_N$) of the counter (405) is greater than or equal to a predefined alarm threshold ($S_{AL}$).

**FIG. 1**

EP 3 874 249 B1

FIG. 2

EP 3 874 249 B1

FIG. 3

## FIG. 4

## FIG. 5

FIG. 6

FIG. 7

## FIG. 8

## FIG. 9

## FIG. 10

EP 3 874 249 B1

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2390742 A1
- WO 2013191594 A1
- EP 1916399 A